**Europäisches Patentamt**

**European Patent Office**

**Office européen des brevets**

(11) Veröffentlichungsnummer: **0 059 248**
**A1**

## (12) EUROPÄISCHE PATENTANMELDUNG

(21) Anmeldenummer: 81108866.5

(22) Anmeldetag: 24.10.81

(51) Int. Cl.³: **B 01 D 53/36**
**B 01 D 53/34**

(30) Priorität: 26.02.81 DE 3107117

(43) Veröffentlichungstag der Anmeldung:
08.09.82 Patentblatt 82/36

(84) Benannte Vertragsstaaten: ·
AT BE CH DE FR GB IT LI NL SE

(71) Anmelder: Uhde GmbH
Deggingstrasse 10 - 12
D-4600 Dortmund 1(DE)

(71) Anmelder: Kali-Chemie Aktiengesellschaft
Postfach 220 Hans-Böckler-Allee 20
D-3000 Hannover 1(DE)

(72) Erfinder: Wolstein, Friedrich, Dr. Dipl.-Chem.
Goethe-Strasse 66
D-4300 Essen(DE)

(72) Erfinder: Koch, Gerhard, Dr. Dipl.-Chem.
Alter Schulweg 12
D-3072 Marklohe(DE)

(72) Erfinder: Dümmler, Friedrich, Dipl.-Ing.
Baststrasse 12
D-4600 Dortmund 30(DE)

(72) Erfinder: Walter, Robert, Dr. Dipl.-Chem.
Bruchstrasse 106
D-4330 Mühlheim(DE)

(72) Erfinder: Spindler, Hans, Ing. grad.
Neuhoffstrasse 26
D-4600 Dortmund 30(DE)

(72) Erfinder: Weidenbach, Günther, Dr. Dipl.-Chem.
Lehltestrasse 52
D-3000 Hannover(DE)

(74) Vertreter: Patentanwälte Meinke und Dabringhaus
Dipl.-Ing. J. Meinke Dipl.-Ing. W. Dabringhaus
Westenhellweg 67
D-4600 Dortmund 1(DE)

(54) Verfahren zur Abtrennung von NOx-Gas.

(57) Bei einem Verfahren zur Verringerung von $NO_x$-Gehalten in Abgasen, insbesondere von Abgasen einer Salpetersäureanlage, mit einer katalytischen Reduktion der $NO_x$-Gase, soll eine Lösung geschaffen werden, mit der insbesondere der Gehalt an Stickstoffoxiden in Abgasen auf die heute geforderten niedrigen Werte vermindert werden kann, ohne daß der eingesetzte Katalysator irreversibel vergiftet wird. Dies wird dadurch erreicht, daß die Verringerung zweistufig erfolgt, wobei in einer ersten Stufe durch Alkalien, wie z.B. Natronlauge oder Sodalösungen, ein Teil des $NO_x$-Gases herausgelöst und anschließend in einer zweiten Stufe der verbleibende Rest an $NO_x$-Gas katalytisch unter Zugabe von Ammoniak zu Stickstoff reduziert wird.

Die Erfindung betrifft ein Verfahren zur Verringerung von $NO_x$-Gehalten in Abgasen, insbesondere von Abgasen einer Salpetersäureanlage, mit einer katalytischen Reduktion der $NO_x$-Gase.

Verfahren zur Verringerung von $NO_x$ in Abgasen sind in den vielfältigsten Variationen bekannt, wobei grundsätzlich drei verschiedene Wege in der Literatur beschrieben und in der Praxis angewendet werden. Zum einen handelt es sich dabei um eine katalytische Reduktion mit Ammoniak, Wasserstoff oder anderen Reduktionsmitteln. Eine zweite Möglichkeit besteht in der Verbrennung bzw. Zersetzung der $NO_x$-Gase unter Zufuhr von Wärme. Die dritte Möglichkeit besteht darin, eine Adsorption des $NO_x$-Gases an einer porösen Substanz, wie z.B. Kieselgur oder Molekularsieben, zu erreichen. Die vorliegende Erfindung fußt auf der ersten Möglichkeit, nämlich der katalytischen Reduktion, wie diese beispielsweise in der DE-OS 30 17 896, DE-OS 30 08 306, DE-OS 28 24 246 oder DE-OS 27 48 634 angesprochen sind.

Entsprechende Katalysatoren wurden ebenfalls in sehr unterschiedlichen Zusammensetzungen erprobt und eingesetzt, insbesondere auf der Basis von Vanadin/molybdän-Verbindungen, aber auch auf der Basis von Metallen der Platingruppe. Beispiele derartiger Verbindungen sind z.B. aus

0059248

der DE-OS 28 01 783 oder DE-OS 27 44 688 und DE-OS 26 34 279 bekannt.

Die eingesetzten Katalysatoren bedingen z.T. sehr unterschiedliche Betriebstemperaturen, die, wie sich aus der nachfolgenden, keinen Anspruch auf Vollständigkeit erhebenden, Zusammenstellung ergibt, alle in einem Bereich oberhalb etwa 150° C liegen:

| DE-AS 30 08 308 | 190 | - 250° C |
|---|---|---|
| DE-OS 28 24 246 | 200 | - 500° C |
| DE-AS 28 01 783 | 300 | - 500° C |
| DE-OS 27 48 634 | 200 | - 600° C |
| DE-OS 27 05 818 | 148,9 | - 371,1° C |
| DE-AS 26 39 848 | 300 | - 900° C |
| DE-AS 26 19 662 | 250 | - 750° C |
| DE-AS 26 08 038 | 400 | - 1000° C |
| DE-AS 26 03 910 | 316 | - 510° C |
| DE-OS 24 60 681 | 300 | - 370° C |
| DE-AS 24 58 888 | 150 | - 550° C |
| DE-OS 24 40 433 | größer | 500° C |
| DE-AS 23 62 255 | 550 | - 1000° C |

Nachteilig an den bekannten Verfahren ist, wie sich aus der obigen Aufstellung ergibt, das hohe Temperaturniveau der bekannten Prozeßführung, wobei bei Katalysatoren des Pt-Typs die Reaktion bei vergleichsweise niedrigen Temperaturen erfolgt.

Bei der Salpetersäureherstellung werden heute im wesentlichen folgende Verfahren angewendet:

1) Absorption bei Niederdruck $<$ 2 bar
2) Absorption der $NO_x$-Gase bei Mitteldruck 3 - 6 bar
3) Absorption der $NO_x$-Gase bei Hochdruck über 7 bar.

Der $NO_x$-Gehalt im Restgas der obigen Verfahren ist stark unterschiedlich. Bei einer Niederdruck-Absorption können im Restgas noch etwa 3000 - 4000 ppm $NO_x$ vorhanden sein. Bei einer Mitteldruck-Absorption ca.500 - 1500 ppm $NO_x$ und einer Hochdruck-Absorption ca. 200 - 800 ppm $NO_x$. Der höheren Reaktionsausbeute an $NO_x$ bei höheren Drücken steht jedoch ein höherer Energieaufwand für die Kompression gegenüber.

Um den $NO_x$-Gehalt weiter zu verringern, kann eine alkalische Wäsche eingeführt werden, sofern das entstehende Alkalinitrat/-nitrit-Gemisch einer anderweitigen Verwendung zugeführt werden kann. Z.B. läßt sich der $NO_x$-Gehalt nach einer alkalischen Wäsche von 3000 - 4000 ppm auf etwa 700 ppm vermindern. In Fällen, wo diese Werte noch nicht ausreichend sind, müssen Möglichkeiten einer weiteren Verminderung gesucht werden.

Ein weiterer Nachteil besteht bei den bekannten katalytischen Verfahren darin, daß die bekannten Katalysatortypen nicht alkalibeständig sind. Dies bedeutet, daß

- 4 -

0059248

bei Berührung des Katalysators mit Alkalilaugen sich entweder mit der Trägersubstanz Alkalisilikate bilden oder die auf den Träger aufgebrachte Substanz zu Hydroxyden reagiert oder durch andere chemische Reaktionen inaktiviert wird. Das ist dann ganz besonders nachteilig, wenn bei Einsatz einer alkalischen Wäsche Alkaliverbindungen an den Katalysator gelangen, was selbst bei Einsatz von Abscheidern nicht ganz verhindert werden kann.

Aufgabe der Erfindung ist es, eine Lösung zu schaffen, mit der insbesondere der Gehalt an Stickstoffoxiden in Abgasen auf die heute geforderten niedrigen Werte vermindert werden kann, ohne daß der eingesetzte Katalysator irreversibel vergiftet wird.

Bei einem Verfahren der eingangs bezeichneten Art wird diese Aufgabe gemäß der Erfindung dadurch gelöst, daß die Verringerung zweistufig erfolgt, wobei in einer ersten Stufe durch Alkalien, wie z.B. Natronlauge oder Sodalösungen, ein Teil des $NO_x$-Gases herausgelöst und anschließend in einer zweiten Stufe der verbleibende Rest an $NO_x$-Gas katalytisch unter Zugabe von Ammoniak zu Stickstoff reduziert wird.

Durch die Erfindung wird mit einfachen und sehr wirkungsvollen Mitteln erreicht, daß der gesamte Prozeß zur Verminderung des $NO_x$-Gehaltes bei niedrigen Temperaturen er-

folgen kann, ohne daß die Gefahr einer Zerstörung oder Beeinträchtigung des eingesetzten Katalysators eintreten kann. Mit der erfindungsgemäßen zweistufigen Reinigung eines $NO_x$-haltigen Abgases, insbesondere einer Salpetersäureanlage, kann der $NO_x$-Wert auf unter 200 ppm gesenkt werden.

In Ausgestaltung sieht die Erfindung vor, daß die alkalische Wäsche der ersten Stufe in einem Temperaturbereich von 20° C bis 80° C erfolgt, wobei in einer weiteren Ausgestaltung vorgesehen sein kann, daß das zu behandelnde Abgas nach Verlassen der ersten Stufe auf 130° C bis 180° C, vorzugsweise auf 170° C, erwärmt wird.

Aus der Literatur ist es bekannt, daß bei der Reduktion von $NO_x$-Gasen mit Ammoniak unter Verwendung eines Katalysators sich Ammonnitrat bzw. Ammonnitrit bilden kann. Da oberhalb einer Reaktionstemperatur von 200° C diese Nebenreaktion von untergeordneter Bedeutung ist (Ammoniumnitrat zersetzt sich ab 180° C wieder, während unterhalb von 200° C es zu verstärkter Ammoniumnitratbildung und den damit verbundenen Gefahren kommen kann), muß diesem Phänomen besonders Rechnung getragen werden.

Nachdem in der alkalischen Wäsche $NO_2$ und NO unter Nitrat/-Nitritbildung entfernt wurde, verbleibt dann das überschüssige NO im Abgas. Nach der alkalischen Wäsche wird das Abgas erfindungsgemäß wiederum auf 130° C bis 180° C, vorzugsweise auf 170° C erwärmt. In der nun anschließenden katalytischen Reduktion unter Zusatz von Ammoniak kann es nur noch untergeordnet zu einer Bildung von Ammonnitrat kommen, da nur noch geringe Anteile von $NO_2$ vorhanden sind. Ammonnitrit aber ist bei dieser Temperatur nicht beständig.

In der zweiten Stufe sind durch die erfindungsgemäße Verfahrensführung nur noch solche $NO_x$-Gase wie NO und evtl. noch Reste von $NO_2$ katalytisch zu reduzieren, so daß für diese Reaktion eine Vielzahl von sehr wirkungsvollen Katalysatoren bereitstehen, insbesondere aber ein Pt-Katalysator.

Nach der Erfindung kann auch vorgesehen sein, daß als Katalysator der zweiten Stufe zur katalytischen Reduktion des restlichen $NO_x$-Gases ein alkalibeständiger Katalysator eingesetzt wird, wobei es zweckmäßig ist, daß der Katalysator mit Wasser bei einer Temperatur von 20° C bis 130° C waschbar ist, wie dies die Erfindung ebenfalls vorsieht.

Die zweistufige Verfahrensführung nach der Erfindung bewirkt beispielsweise eine Reduzierung des $NO_x$-Gehaltes in der ersten Stufe der alkalischen Wäsche auf weniger als 700 ppm, die anschließende katalytische Reaktion in der zweiten Stufe reduziert den verbleibenden $NO_x$-Gehalt auf ca. 80 % des geforderten Wertes.

Die Erfindung ist nicht auf den Einsatz bei Abgasreinigungsanlagen einer Salpetersäureanlage beschränkt, wenngleich hier der Haupteinsatzbereich zu sehen ist.

- 8 -

0059248

Ansprüche :

1. Verfahren zur Verringerung von $NO_x$-Gehalten in Abgasen, insbesondere von Abgasen einer Salpetersäureanlage, mit einer katalytischen Reduktion der $NO_x$-Gase, dadurch gekennzeichnet, daß die Verringerung zweistufig erfolgt, wobei in einer ersten Stufe durch Alkalien, wie z.B. Natronlauge oder Sodalösungen, ein Teil des $NO_x$-Gases herausgelöst und anschließend in einer zweiten Stufe der verbleibende Rest an $NO_x$-Gas katalytisch unter Zugabe von Ammoniak zu Stickstoff reduziert wird.

2. Verfahren nach Anspruch 1, dadurch gekennzeichnet, daß als erste Stufe eine alkalische Wäsche in einem Temperaturbereich von 20° C - 80° C erfolgt.

3. Verfahren nach Anspruch 1 oder 2, dadurch gekennzeichnet, daß das zu behandelnde Abgas nach Verlassen der ersten Stufe auf 130° C - 180° C, vorzugsweise auf 170° C erwärmt wird.

4. Verfahren nach einem der vorangehenden Ansprüche, dadurch gekennzeichnet, daß in der zweiten Stufe ein alkalibeständiger Katalysator eingesetzt wird.

5. Verfahren nach Anspruch 4, dadurch gekennzeichnet, daß der Katalysator mit Wasser, vorzugsweise bei einer Temperatur von 20° C - 130° C waschbar ist.

**0059248**

Nummer der Anmeldung

## Europäisches Patentamt — EUROPÄISCHER RECHERCHENBERICHT

EP 81 10 8866

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| XY | <u>US - A - 3 887 683</u> (Y. ABE et al.) <br> * Anspruch 1 * | 1-5 | B 01 D 53/36 <br> 53/34 |
| Y | <u>DE - A - 2 433 076</u> (TAKEDA CHEMICAL IND.) <br> * Ansprüche 13,17 * | 3,5 | |
| Y | <u>FR - A - 2 377 835</u> (KUREHA KAGAKU KOGYO KABUSHIKI KAISHA) <br> * Seite 4, Zeilen 32-34; Ansprüche 5,7 * <br> & DE - A - 2 801 782 | 3,5 | |
| Y | <u>DE - A - 2 801 783</u> (KUREHA KAGAKU KOGYO K.K.) <br> * Seite 4, Zeilen 19-22 * | 3,5 | |
| Y | <u>US - A - 4 145 399</u> (TOKUZO NAGAOKA et al.) <br> * Spalte 5, Zeilen 44-47 * | 2 | |

**RECHERCHIERTE SACHGEBIETE (Int. Cl.³)**

B 01 D 53/36
53/34

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-01-1982 | DE LA MORINERIE |

EPA form 1503.1   06.78